# EUROPEAN PATENT SPECIFICATION

(11) **EP 1 671 530 B1**
(45) Date of publication and mention of the grant of the patent: **16.01.2008**
(21) Application number: 04030089.9
(22) Date of filing: 18.12.2004
(51) Int. Cl.: A01D 43/08

(54) **Harvesting machine**
Erntemaschine
Machine de récolte

(43) Date of publication of application: 21.06.2006
(73) Proprietor: DEERE & COMPANY, Moline, Illinois 61265-8098 (US); Cemagref, 63172 Aubière (FR)
(72) Inventor: Debain, Christophe, 63450 Saint Saturnain (FR); Benet, Bernard, 63370 Lempdes (FR); Berducat, Michel, 63960 Veyre Monton (FR); Pirro, Peter, Dr., 66917 Wallhalben (DE)
(74) Representative: Holst, Sönke

(56) References cited:
- EP-A- 1 360 891
- EP-A- 1 396 184
- EP-A- 1 402 769
- US-A- 6 119 442

## Description

The invention pertains to a harvesting machine including a chopper means for cutting harvested crop into short lengths, a crop feed arrangement for feeding the harvested crop to the chopper means, a drive arrangement for driving the crop feed arrangement and the chopper means, the drive arrangement including at least one adjustable component for driving at least one of said crop feed arrangement or chopper means at a variable speed so as to change the length into which the harvested crop is cut, a control device connected to the adjustable component and to a crop parameter sensor for measuring at least one parameter of the crop being harvested, wherein said control device is operative to automatically control the adjustable component such that the length into which crop is cut by said chopper means is a function of said sensed crop parameter.

### Prior art

Forage harvesters, also called field choppers, employed in agriculture are used for cutting and picking up harvested crops, for example, grass or corn, which is normally used as fodder for cattle. To promote the digestibility of the fodder, the cut length of the harvested crop is very important. In current forage harvesters, means have been used for adjusting the cutting length of the chopping device wherein hydraulic motors, adjustable either continuously or in steps or shifting transmissions have been used.

EP 1 360 891 A proposes to control the cut length in a forage harvester dependent on humidity or nutrient content of the crop measured with an optical sensor working in the near infrared range. It is further proposed that the grain content is measured optically and used for determining the length of cut. EP 1 396 184 A proposes to control the cut length in a forage harvester dependent on the compressibility of the crop.

It was proposed to investigate agricultural products with cameras and image processing systems in order to determine various crop parameters. EP 0 916 082 describes an image analysis of a forage sample for gaining information about the nutrient content of the forage. US 5 309 374 A proposes an image analysis for detecting the mass or shape of harvested products. US 6 119 442 A relates to a combine harvester in which threshed crop is under surveillance of a camera. The image is processed in order to detect damaged grain and to control the threshing mechanism accordingly such that grain damage is automatically reduced.

A problem with forage harvester is that the real cutting length does not always correspond to a theoretical cutting length that can be calculated from the speed with which the crop is fed to the chopper means and the speed of the chopper means and the number of knives distributed around its circumference, since, for example, slippage may occur when the crop has a relatively high moisture. The length of cut thus can depend on crop properties as moisture and the variety of crop.

### Task of the Invention

The problem underlying the invention is to improve a harvesting machine with a chopper means such that the achieved cutting length corresponds better to a desired cutting length.

This is achieved by the teaching of claims 1 and 6. The dependent claims quote features improving the solution in an advantageous manner.

The harvesting machine comprises a crop feed arrangement for feeding the harvested crop to a chopper means. One or both of the chopper means and the crop feed arrangement are driven with variable speed, controlled by a control device. It is proposed that the control device is connected to a sensor providing information about a granulometric parameter of the chopped crop. The control device is operable to control the speed of the chopper means and/or the crop feed arrangement such that at least one granulometric parameter (or more of them), especially the size (for example length, area or volume) of the chopped crop particles, measured with the sensor corresponds to a desired granulometric parameter. The latter can be input by an operator or automatically established by a second sensor interacting with the crop. The second sensor can measure e.g. the moisture of the crop, its nutrient content, its compressibility, or its grain content.

An advantage of the teaching of the invention is that the real length of cut corresponds more closely to the desired length of cut, independent on the variety and physical properties of the chopped crop. The invention can be used in particular in a forage harvester with a chopper drum as chopper means or in a combine with a straw chopper as a chopper means.

In a preferred embodiment, the sensor for measuring the size of the chopped crop comprises a camera viewing upon the crop stream downstream the chopper means. An electronic image signal containing an two dimensional image information delivered by the camera is processed by an image processing system in order to extract an granulometric information such as the medium size or parameters representative of the overall distribution of the chopped crop. This information is provided to the control device. Another possible embodiment comprises a sieve with different hole sizes and means for detecting the crop particles passing through the respective hole. From time to time, crop samples can be delivered onto the sieve. The number of crop particles passing through the different holes is counted and a mean size of the particles is established. Granulometric information after the sieving process can also be given by a camera device.

When a camera is used for detecting the crop size in situ directly above (or below or besides) the flow, a potential problem resides in the relatively high speed of the crop. A first possible embodiment is using a high speed, black and white or colour camera synchronized with an electronic flash in order to provide light flashes upon the crop within the viewing angle of the camera. In this case, the exposure time can be controlled by the shutter performance (speed) of the camera and is independent on the time duration of the light source. In order to avoid the need of using a camera having a very high shutter speed, a second embodiment is using a more common camera and controlling the time duration of the electronic flash or a stroboscope. As with normal photographic cameras, the flash illuminates the crop sample for a quite short time, such that a sharp image is obtained.

### Embodiment of the invention

The figures show one embodiment of the invention, which is described in greater detail below.
Figure 1 is a schematic, left side elevational view of a harvesting machine with which the present invention is particularly adapted for use.
Figure 2 is a schematic side view of a sensor suitable for measuring the size of chopped crop.
Figure 3 is a schematic illustration of the device for effecting automatic adjustment of the cutting length.

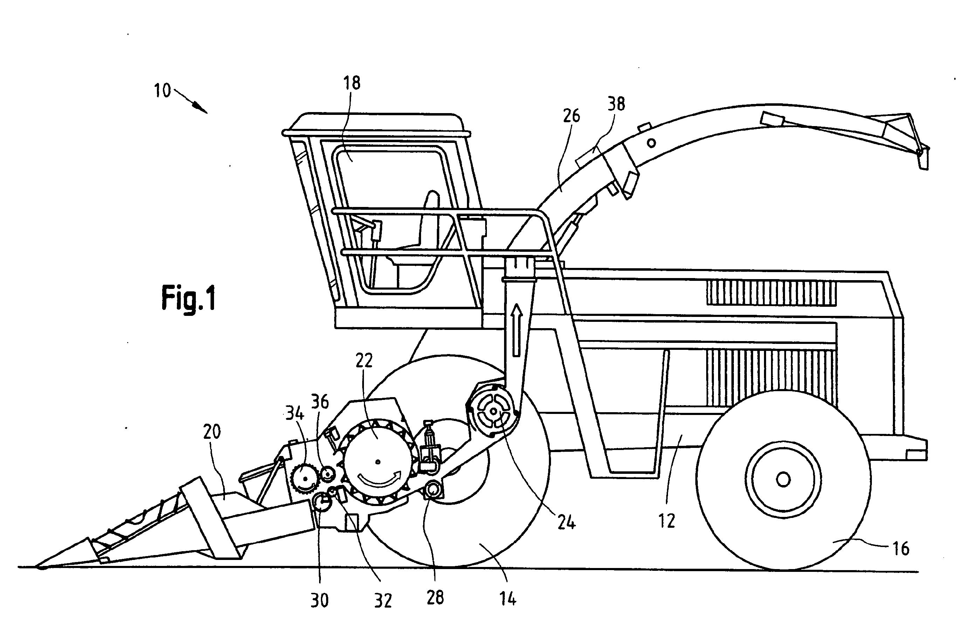

Referring now to Figure 1, there is shown a self-propelled harvesting machine 10 in the form of a forage harvester including a main frame 12 supported on front and rear wheels 14 and 16. The harvesting machine 10 is operated from a driver's cab 18, from which a harvested material pickup device 20 is visible. The crop, e.g., corn, grass or the like, picked up from the ground by the harvested material pickup device 20, is moved by means of four front press rollers 30, 32, 34, 36 to a chopper means 22 in form of a chopper drum or cutter head, which chops the crop into small pieces and sends it to a conveyor unit 24. The material passes from the harvesting machine 10 to a side trailer via a discharge chute 26, which may be adjusted about an upright axis. Located between the chopper means 22 and the conveyor unit 24 is a kernel processor device including two cooperating rollers 28, which act to feed the conveyed material tangentially to the conveyor unit 24. Upon the top surface of the discharge chute 26, a crop parameter sensor 38 is mounted.

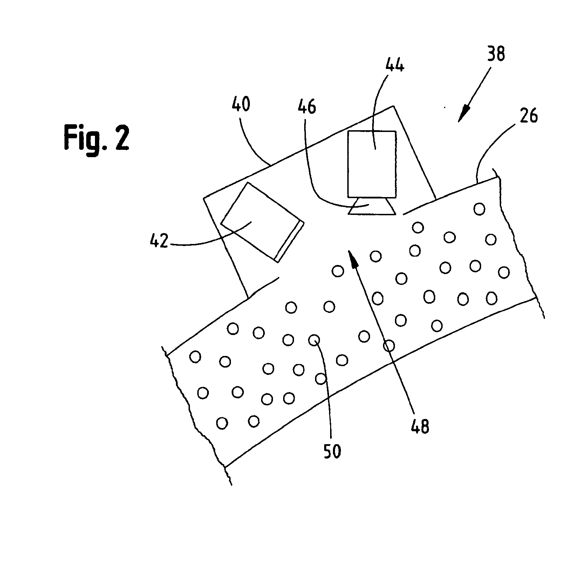

In Figure 2, the crop parameter sensor 38 is shown in greater detail. The sensor 38 is mounted within a light-tight, protective housing 40 mounted to the discharge chute 26. Within the housing 40, a flashlight 42 and an electronic camera 44 are provided. The camera 44 has a lens 46 viewing through an opening 48 into the interior of the discharge chute 26, such that an image of the chopped crop particles 50 flowing through the discharge chute 26 is obtained. Another possible embodiment comprises a ring flash around the camera lens or a flashlight on both sides of the camera 44, the latter being in a plane perpendicular to the opening window 48. The flashlight 42 is operable to submit subsequently flashes, e. g. in intervals of 500 ms or less, with very short time duration (10 µs or less) coupled with the camera 44, upon the chopped crop particles 50 in the viewing angle of the lens 46. Although not shown, on the underside of the discharge chute 26, below the opening 48, a cover for avoiding or reducing entry of light from the circumference might be provided. Within the opening 48, a transparent screen may be provided, preferably with high scratch resistance, e.g. of sapphire glass.

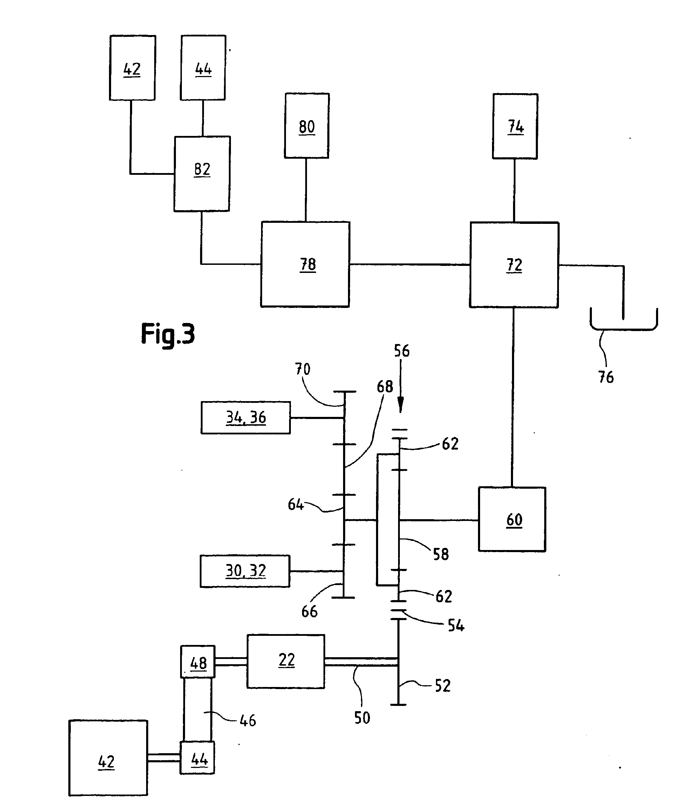

The camera 44 provides an electronic signal containing a two dimensional picture information to a digital image processing system 82 (Figure 3) using a microprocessor or microcontroller. The image processing system 82 is operable to process the picture information, and derives data on granulometric characteristics of the crop particles 50 under consideration of the viewing angle between the camera 44 and the flow direction of the chopped crop particles 50. The granulometric data contain information on the particle size such as the mean length of the chopped crop particles 50. A distinction between length and width of the particles 50 can be performed using an expected length of cut derived from the speed of the rollers 30-36 and the chopper means 22. Thus, length is considered as the one of the two measurements of the particles 50 fitting best to the expected cut length. In another embodiment, the length is simply considered as the size of the particles 50 in the flow direction within the discharge chute 26. The image processing system 82 also controls the flashlight 42 and instructs it to submit a flash once processing of a previously taken image is finalized and a capacitor of the flashlight is sufficiently charged such that a flash can be provided.

The present invention allows to control the cut length of the chopped crop with a desired cut length and to adjust the cut length such that the desired cut length is obtained. The cut length of the chopped crop that is ejected from the discharge chute 26 depends on the rotating speed of the front press rollers 30-36, on the speed of the chopper means 22, and on the number of blades or knives attached to the chopper means 22. Figure 3 shows a detailed illustration of the drive unit for the chopper means 22 and the front press rollers 30-36, and the device for automatic adjustment of the cutting length.

An internal combustion engine 42 operating at constant speed, while in a harvest mode, drives a transmission belt 46 via a pulley 44 which includes a disengageable coupling. The transmission belt 46, in turn, drives a pulley 48 coupled to the chopper means 22. The chopper means 22 includes a solid shaft 50 which drives a cogwheel or gear 52 which is meshed with a ring gear 54 of a planetary gear train 56. The planetary gear train 56 includes a sun wheel 58 coupled to a hydraulic motor 60. Planet gears 62 of the planetary gear train 56 are coupled via a planet carrier with a cogwheel or gear 64 that drives the lower front press rollers 30, 32 via an additional cogwheel or gear 66, and drive the upper front press rollers 34, 36 in a direction opposite that of the lower front press rollers, via additional cogwheels or gears 68 and 70. Due to this configuration, the chopper means 22 is driven at a constant rotational speed. The rotational speed of the front press rollers 30-36 depends on the rotational speed and direction of the hydraulic motor 60. The latter serves as an adjustable component for driving a crop feed component (rollers 30-36) at a variable speed.

The hydraulic motor 60 is connected, by a valve unit 72, to a pressurized hydraulic fluid source 74 and to a hydraulic fluid supply tank 76. The valve unit 72 is connected electrically to a control device 78 that can be actuated to control the valve unit 72 such that the hydraulic motor 60 will rotate at a rotational speed and direction specified by the control unit 78. The control unit 78 is thus suited for continuous adjustment of the cutting length of the ejected material.

The control unit 78 is also connected to an input means 80 for inputting a desired length of cut. The control unit 78, during operation, compares the desired length of cut input by the operator via the input means 80 with the measured length of cut provided by the image processing system 82 and adjusts the speed of the motor 60 by means of the valve unit 72 such that the desired cut length and the measured cut length are at least approximately equal.

It should be mentioned that different modifications to the invention are possible. For example, it would be possible to use any type of (second) sensor for detecting crop properties, like the moisture, instead of, or in addition to, the input means 80, in order to establish a desired length of cut dependent on crop properties. Preferably, the operator can switch between an automatic and a manual mode. Such a second sensor for detecting moisture could be a microwave sensor, a capacitive sensor, an optical sensor, or a conductivity sensor. Alternatively, the protein content of the chopped crop could be measured by a second sensor operating in the near-infrared range and used for establishing a desired cut length. If several sensors are used that measure different parameters of the chopped crop, then the control unit 78 will derive a cutting length value which best fits with the combination of measured parameters. The crop parameter sensor 38 can also be located at a point on the harvesting machine 10 between the chopper means 22 and the rotatable support of the discharge chute 26 on the body of the harvesting machine 10.

## Claims

1. A harvesting machine (10) including a chopper means (22) for cutting harvested crop into short lengths, a crop feed arrangement for feeding the harvested crop to the chopper means (22), a drive arrangement for driving the crop feed arrangement and the chopper means (22), the drive arrangement including at least one adjustable component for driving at least one of said crop feed arrangement or chopper means (22) at a variable speed so as to change the length into which the harvested crop is cut, a control device (78) connected to the adjustable component and to a crop parameter sensor (38) for measuring at least one parameter of the crop being harvested, wherein said control device (78) is operative to automatically control the adjustable component such that the length into which crop is cut by said chopper means (22) is a function of said sensed crop parameter, **characterized in that** the crop parameter sensor (38) is operable to measure a granulometric parameter of the chopped crop.

2. A harvesting machine (10) according to claim 1, **characterized in that** the crop parameter sensor (38) is operable to measure the size of the chopped crop.

3. A harvesting machine (10) according to claim 1 or 2, **characterized in that** the crop parameter sensor (38) comprises a camera (44) viewing upon the chopped crop downstream the chopper means (22) and providing an electronic input signal to an image processing system (82) that is operable to derive the granulometric parameter of the chopped crop particles (50) from the input signal.

4. A harvesting machine (10) according to claim 3, **characterized in that** the crop parameter sensor (38) comprises a flashlight (42) for illuminating the crop particles (50) within the viewing range of the camera (44) with successive flashes.

5. A harvesting machine (10) according to claim 4, **characterized in that** the flashlight (42) is operable to provide flashes of controlled flash duration and is synchronized with the camera (44).

6. A method of controlling a harvesting machine (10) including a chopper means (22) for cutting harvested crop into short lengths, a crop feed arrangement for feeding the harvested crop to the chopper means (22), a drive arrangement for driving the crop feed arrangement and the chopper means (22), the drive arrangement including at least one adjustable component for driving at least one of said crop feed arrangement or chopper means (22) at a variable speed so as to change the length into which the harvested crop is cut, a control device (78) connected to the adjustable component and to a crop parameter sensor (38) for measuring at least one parameter of the crop being harvested, wherein said control device (78) is automatically controlling the adjustable component such that the length into which crop is cut by said chopper means (22) is a function of said sensed crop parameter, **characterized in that** the crop parameter sensor (38) is measuring a granulometric parameter of the chopped crop.

## Patentansprüche

1. Erntemaschine (10) mit einer Häckseleinrichtung (22) zum Schneiden von Erntegut auf kurze Längen, einer Erntegutzuführanordnung zum Zuführen des Ernteguts zur Häckseleinrichtung (22), einer Antriebsanordnung zum Antreiben der Erntegutzuführanordnung und der Häckseleinrichtung (22) , wobei die Antriebsanordnung mindestens eine verstellbare Komponente zum Antrieb der Erntegutzuführanordnung und/oder der Häckseleinrichtung (22) mit einer variablen Geschwindigkeit enthält, um die Länge zu ändern, auf die das Erntegut geschnitten wird, einer Steuervorrichtung (78), die mit der verstellbaren Komponente und mit einem Erntegutparametersensor (38) zum Messen mindestens eines Parameters des gerade geernteten Guts verbunden ist, wobei die Steuervorrichtung (78) dahingehend wirkt, die verstellbare Komponente automatisch so zu steuern, dass die Länge, auf die das Erntegut durch die Häckseleinrichtung (22) geschnitten wird, eine Funktion des erfassten Erntegutparameters ist, **dadurch gekennzeichnet, dass** der Erntegutparametersensor (38) dahingehend wirkt, einen granulometrischen Parameter des gehäckselten Ernteguts zu messen.

2. Erntemaschine (10) nach Anspruch 1, **dadurch gekennzeichnet, dass** der Erntegutparametersensor (38) dahingehend wirkt, die Größe des gehäckselten Ernteguts zu messen.

3. Erntemaschine (10) nach Anspruch 1 oder 2, **dadurch gekennzeichnet, dass** der Erntegutparametersensor (38) eine Kamera (44) umfasst, die auf das gehäckselte Erntegut stromabwärts der Häckseleinrichtung (22) blickt und ein elektronisches Eingangssignal einem Bildverarbeitungssystem (82) zuführt, das dahingehend wirkt, aus dem Eingangssignal den granulometrischen Parameter der gehäckselten Erntegutpartikel (50) abzuleiten.

4. Erntemaschine (10) nach Anspruch 3, **dadurch gekennzeichnet, dass** der Erntegutparametersensor (38) ein Blitzlicht (42) zur Beleuchtung der Erntegutparktikel (50) im Beobachtungsbereich der Kamera (44) mit aufeinander folgenden Blitzen umfasst.

5. Erntemaschine (10) nach Anspruch 4, **dadurch gekennzeichnet, dass** das Blitzlicht (42) dahingehend wirkt, Blitze mit kontrollierter Blitzdauer bereitzustellen, und mit der Kamera (44) synchronisiert ist.

6. Verfahren zum Steuern einer Erntemaschine (10) mit einer Häckseleinrichtung (22) zum Schneiden von Erntegut auf kurze Längen, einer Erntegutzuführanordnung zum Zuführen des Ernteguts zur Häckseleinrichtung (22), einer Antriebsanordnung zum Antreiben der Erntegutzuführanordnung und der Häckseleinrichtung (22), wobei die Antriebsanordnung mindestens eine verstellbare Komponente zum Antrieb der Erntegutzuführanordnung und/oder der Häckseleinrichtung (22) mit einer variablen Geschwindigkeit enthält, um die Länge zu ändern, auf die das Erntegut geschnitten wird, einer Steuervorrichtung (78), die mit der verstellbaren Komponente und mit einem Erntegutparametersensor (38) zum Messen mindestens eines Parameters des gerade geernteten Guts verbunden ist, wobei die Steuervorrichtung (78) die verstellbare Komponente automatisch so steuert, dass die Länge, auf die das Erntegut durch die Häckseleinrichtung (22) geschnitten wird, eine Funktion des erfassten Erntegutparameters ist, **dadurch gekennzeichnet, dass** der Erntegutparametersensor (38) einen granulometrischen Parameter des gehäckselten Ernteguts misst.

## Revendications

1. Machine de récolte (10) comprenant des moyens formant hacheur (22) pour couper la récolte récoltée en de courtes longueurs, un agencement d'alimentation de récolte pour alimenter la récolte récoltée aux moyens formant hacheur (22), un agencement d'entraînement pour entraîner l'agencement d'alimentation de récolte et les moyens formant hacheur (22), l'agencement d'entraînement comprenant au moins un composant ajustable pour entraîner au moins l'un dudit agencement d'alimentation de récolte ou des moyens formant hacheur (22) à une vitesse variable afin de changer la longueur selon laquelle la récolte récoltée est coupée, un dispositif de commande (78) raccordé au composant ajustable et à un capteur de paramètres de récolte (38) pour mesurer au moins un paramètre de la récolte qui a été récoltée, dans laquelle ledit dispositif de commande (78) est opérationnel pour commander automatiquement le composant ajustable de sorte que la longueur selon laquelle la récolte est coupée par lesdits moyens formant hacheur (22) est fonction dudit paramètre de récolte détecté, **caractérisée en ce que** le capteur de paramètres de récolte (38) est opérationnel pour mesurer un paramètre de granulométrie de la récolte hachée.

2. Machine de récolte (10) selon la revendication 1, **caractérisée en ce que** le capteur de paramètres de récolte (38) est opérationnel pour mesurer la taille de la récolte hachée.

3. Machine de récolte (10) selon la revendication 1 ou 2, **caractérisée en ce que** le capteur de paramètres de récolte (38) comprend une caméra (44) observant la récolte hachée en aval des moyens formant hacheur (22) et fournissant un signal d'entrée électronique à un système de traitement d'image (82) qui est opérationnel pour dériver le paramètre de granulométrie des particules de récolte hachée (50) du signal d'entrée.

4. Machine de récolte (10) selon la revendication 3, **caractérisée en ce que** le capteur de paramètres de récolte (38) comprend un flash (42) pour éclairer les particules de récolte (50) dans la plage d'observation de la caméra (44) avec des flashs successifs.

5. Machine de récolte (10) selon la revendication 4, **caractérisée en ce que** le flash (42) est opérationnel pour émettre des flashs d'une durée de flash contrôlée et est synchronisé avec la caméra (44).

6. Procédé pour commander une machine de récolte (10) comprenant des moyens formant hacheur (22) pour couper la récolte récoltée en courtes longueurs, un agencement d'alimentation de récolte pour alimenter la récolte récoltée aux moyens formant hacheur (22), un agencement d'entraînement pour entraîner l'agencement d'alimentation de récolte et les moyens formant hacheur (22), l'agencement d'entraînement comprenant au moins un composant ajustable pour entraîner au moins l'un dudit agencement d'alimentation de récolte ou des moyens formant hacheur (22) à une vitesse variable afin de changer la longueur selon laquelle la récolte récoltée est coupée, un dispositif de commande (78) raccordé au composant ajustable et à un capteur de paramètres de récolte (38) pour mesurer au moins un paramètre de la récolte qui est récoltée, dans lequel ledit dispositif de commande (78) commande automatiquement le composant ajustable de sorte que la longueur selon laquelle la récolte est coupée par lesdits moyens formant hacheur (22) est fonction du paramètre de récolte détecté, **caractérisé en ce que** le capteur de paramètres de récolte (38) mesure un paramètre de granulométrie de la récolte hachée.
